# EUROPÄISCHE PATENTSCHRIFT

(11) **EP 3 807 019 B1**
(45) Veröffentlichungstag und Bekanntmachung des Hinweises auf die Patenterteilung: **13.07.2022**
(21) Anmeldenummer: 19713413.3
(22) Anmeldetag: 21.03.2019
(51) Int. Cl.: B07B 1/18, B01D 29/01, B07B 1/46, B23P 11/00, B21D 39/00, B21D 39/03, B01D 33/067, B01D 33/073, B01D 33/00

(54) **SIEBHERSTELLVERFAHREN FÜR EINE ZYLINDRISCHE SIEBVORRICHTUNG UND ZYLINDRISCHE SIEBVORRICHTUNG**
SCREENING PRODUCTION METHOD FOR A CYLINDRICAL SCREENING DEVICE AND CYLINDRICAL SCREENING DEVICE
PROCÉDÉ DE FABRICATION D'UN DISPOSITIF DE TAMISAGE CYLINDRIQUE ET DISPOSITIF DE TAMISAGE CYLINDRIQUE

(30) Priorität: 12.06.2018 DE 102018113932
(43) Veröffentlichungstag der Anmeldung: 21.04.2021
(73) Patentinhaber: Voith Patent GmbH, 89522 Heidenheim (DE)
(72) Erfinder: BURGER, Ralf, 89558 Böhmenkirch (DE); KOESSLER, Harald, 89542 Herbrechtingen (DE)
(74) Vertreter: Voith Patent GmbH - Patentabteilung
(86) Internationale Anmeldenummer: PCT/EP2019/057044
(87) Internationale Veröffentlichungsnummer: WO 2019/238286

(56) Entgegenhaltungen:
- EP-A1- 1 205 227
- EP-A1- 3 143 198
- DE-B3-102013 224 528

## Beschreibung

Die Erfindung betrifft ein Verfahren zur Herstellung einer zylindrischen Siebvorrichtung mit einer Vielzahl von Profilstäben, bei der mehrere ringförmige, senkrecht zur Zylinderachse verlaufende und voneinander beabstandete Stabhalter an der Innenseite mit randoffenen Aussparungen versehen sind, deren Form den Stabfüßen der Profilstäbe im Wesentlichen komplementär entspricht und die geringfügig größer als die Stabfüße sind und bei der die Profilstäbe parallel zueinander und parallel zur Zylinderachse in die Aussparungen eingesetzt werden, wobei jeweils ein äußerer Stabhalter im Bereich eines jeweiligen stirnseitigen Endringes der Siebvorrichtung zu positionieren ist und sich der Endring radial über den Stabhalter hinaus erstreckt.

Die Erfindung betrifft ebenso eine zylindrische Siebvorrichtung mit einer Vielzahl von Profilstäben, bei der mehrere ringförmige, senkrecht zur Zylinderachse verlaufende und voneinander beabstandete Stabhalter an der Innenseite mit randoffenen Aussparungen versehen sind, deren Form den Stabfüßen der Profilstäbe im Wesentlichen komplementär entspricht und bei der die Profilstäbe parallel zueinander und parallel zur Zylinderachse in die Aussparungen eingesetzt sind, wobei jeweils ein äußerer Stabhalter im Bereich eines jeweiligen stirnseitigen Endringes der Siebvorrichtung angeordnet ist und sich der Endring radial über den Stabhalter hinaus erstreckt, insbesondere hergestellt nach dem erfindungsgemäßen Verfahren.

Ein bekanntes Beispiel für den Einsatz von zylindrischen Siebvorrichtungen dieser Art ist das Sortieren von Faserstoffsuspensionen, wie es in Drucksortierern der papiererzeugenden Industrie durchgeführt wird.

Dabei sollen die in der Suspension enthaltenen Fasern durch das Sieb hindurch treten, während die nicht gewünschten festen Bestandteile an dem Spalt abgewiesen und aus der Siebvorrichtung wieder herausgeleitet werden.

Dadurch, dass die Öffnungen eine im Wesentlichen längliche Form haben, also Schlitze oder Spalten sind, werden faserige Teilchen leichter durchgelassen als die kubischen, auch wenn beide Arten in ähnlicher Größenordnung vorliegen sollten.

Mit einer derartigen Sortiertechnologie ist daher ein sehr guter Ausscheidungseffekt von nicht faserigen Störstoffen aus Faserstoffsuspensionen möglich.

Denkbar ist auch ein Einsatz zur Trennung unterschiedlicher Faserbestandteile, der sogenannten Faserfraktionierung. Voraussetzung ist allerdings eine hohe Präzision der Schlitzform auf der ganzen Siebfläche.

Ein mögliches Verfahren, um solche Siebkörbe herzustellen, zeigt die DE 10 2006 007 660 A1, bei der die Profilstäbe durch plastisches Verformen der mit Vertiefungen für die Stäbe vorgesehenen c-förmigen Halteringe eingeklemmt werden. Hierzu werden für derartige Herstellungsverfahren besonders geeignete Profilstäbe verwendet. Mit Hilfe dieses Verfahrens gelang es, die Herstellung wesentlich zu verbilligen. Das Verfahren wird bei Siebkörben verwendet, bei denen die Stäbe am Innenrand der Halteringe eingesetzt werden. Eine solche Anordnung der Stäbe wird gewählt, wenn die Suspension von innen nach außen die Schlitze passieren soll (zentrifugale Fahrweise). Zur Umformung der Halteringe werden an den Stoßenden von außen Biegekräfte eingeleitet, wobei sich die Stoßenden auf der Innenseite auf Stützwalzen abstützen.

In der EP 31 43 198 A1 wird eine Siebvorrichtung beschrieben, bei der die Halteringe jeweils von einem Stabhalterpaket aus mehreren Stabhaltern gebildet wird. Beim Umbiegen der Stabhalterpakete zu Ringen kommt es wegen der unterschiedlichen Lage der neutralen Faser der Stabhalter eines Stabhalterpaketes zur Klemmung der Profilstäbe in den Aussparungen.

Eine weitere Lösung wird in der US 7 506 767 B2 beschrieben, wobei allerdings ein Schrumpfen des Endrings durch Erhitzen und Abkühlen erzeugt wird und es nicht zu einem dauerhaften Formschluss kommt.

EP 1205227 A1 offenbart ein Verfahren gemäß dem Oberbegriff des Anspruch 1 zur Herstellung einer zylinderförmigen Siebvorrichtung, und eine zylinderförmige Siebvorrichtung gemäß dem Oberbegriff des Anspruch 11.

Wichtig ist, dass die Dimensionen der Sieböffnungen mit sehr geringen Toleranzen eingehalten werden. Um sie von Verstopfungen frei zu halten, sind zumeist Räumer erforderlich, die in geringem Abstand an der Siebfläche vorbei bewegt werden und die hydraulische Impulse erzeugen. Siebvorrichtungen für den Einsatz in Drucksortierern müssen daher sehr präzise gefertigt sein und hohen Belastungen standhalten.

Ein weiteres Problem bei den bisher bekannten Siebvorrichtungen ergibt sich im Zusammenhang mit der Anbindung der Endringe der Siebvorrichtungen bzw. Siebkörbe, und zwar unabhängig davon, ob die Profilstäbe mit den Stabhaltern verschweißt werden oder nicht. So wirkt die Hauptbelastung beim

Betrieb des Sortierers am stärksten im Bereich der Endring-Schweißnaht, da hier der Kraftumlenkpunkt mit der höchsten Spannungsbelastung vorliegt. Auch dies stellt eine permanente Schwachstelle dar, was immer wieder dazu führt, dass die Endringe an dieser Stelle von den Siebzylindern abbrechen. Die Ursache hierfür ist ebenfalls im Schweißprozess begründet.

Darüber hinaus muss beim Anschweißen der Endringe starken Schrumpfspannungen entgegengewirkt werden. Die Siebschlitze in unmittelbarer Nähe zur Schweißnaht verziehen sich. Anlassfarben müssen aufwendig abgeschliffen werden.

Die Aufgabe der Erfindung ist es daher die Befestigung der Endringe zu vereinfachen.

Erfindungsgemäß wurde die Aufgabe hinsichtlich der Verfahrens dadurch gelöst, dass der jeweilige, äußere Stabhalter in eine stirnseitige Aussparung des jeweiligen Endringes gefügt und über radial von außen auf die Endringe einwirkende Kräfte eine Formveränderung der Endringe sowie der äußeren Stabhalter und dabei ein dauerhafter Formschluss zwischen den Profilstäben und den Aussparungen dieser äußeren Stabhalter erzeugt wird.

Infolge des Drückens der Endringe radial nach innen verringert sich ein eventuell vorhandener Spielraum zwischen dem Endring und dem jeweiligen äußeren Stabhalter. Ist kein Spielraum mehr zwischen Endring und äußerem Stabhalter vorhanden, so führen die radialen Kräfte zu einer Verformung des äußeren Stabhalters und zu einer Verkleinerung des Spielraums zwischen Profilstab und Aussparung, was letztendlich zum Verklemmen beider führt. Neben dem Verklemmen kommt es bei dieser plastischen Verformung auch zu einer Härteverfestigung.

Daneben wird über den Formschluss zwischen Endring und äußerem Stabhalter auch eine Fixierung des Endrings am Stabhalter erreicht.

Um diesen Formschluss intensivier und belastbarer zu gestalten, sollte als erfindungswesentliches Merkmal der zylindrischen Siebvorrichtung der jeweilige, äußere Stabhalter in einer stirnseitigen Aussparung des jeweiligen Endringes angeordnet sein und die Aussparung eine radial nach außen gerichtete Hinterschneidung aufweisen , deren Form komplementär zum Außenumfang des Stabhalters ist.

Die äußeren Stabhalter können so leicht in die Aussparung des Endrings gebracht werden.

Beim Zusammendrücken des Endrings wird der hinterschnittene Bereich der Aussparung in Richtung Stabhalter gedrückt und so eine axiale, formschlüssige Fixierung des Stabhalters in dem Endring erreicht.

Des Weiteren ist es vorteilhaft, wenn ein oder mehrere, vorzugsweise alle Profilstäbe am radialen Außenumfang ihres axialen Endes profiliert ausgebildet sind und der gegenüberliegende Kontakt-Bereich des Endrings dazu komplementär ausgeformt ist. Dieser Formschluss zwischen den Profilstäben und dem jeweiligen Endring entsteht ebenfalls infolge des Zsammendrückens des Endrings und steigert die axiale Belastbarkeit der Verbindung zwischen dem Endring und der Siebvorrichtung.

Auch die Fixierung der Profilstäbe in den anderen Stabhaltern kann mit Vorteil dadurch erfolgen, dass die Stabhalter über radial von außen auf die Stabhalter einwirkende Kräfte bis zum dauerhaften Formschluss der Profilstäbe in den Aussparungen dieser Stabhalter verformt werden.

Da die Stabhalter bereits als Ring vorliegen und in der Regel einstückig ausgeführt sind, vereinfacht sich die Herstellung wesentlich. Neben einer exakten zylindrischen Form ergibt sich dadurch eine hohe Genauigkeit bei den Aussparungen und damit auch den Sieböffnungen.

In vielen Fällen kann es genügen, wenn die Fixierung der Profilstäbe in den Aussparungen der Stabhalter ausschließlich über die sich beim radialen Drücken der Stabhalter einstellende Klemmung erfolgt.

Sollte dies nicht genügen, so müssen die Profilstäbe in den Aussparungen der Stabhalter durch Schweißen, Kleben o.ä. fixiert werden.

Während der radialen Krafteinleitung von außen, wird die Innenseite der Stabhalter sowie der Profilstäbe keinen Stütz- oder Biegekräften ausgesetzt, was diese schont.

Besonders einfach gestaltet sich die Herstellung, wenn das radiale Drücken der Endringe bzw. der Stabhalter über mehrere, radial von außen auf die Endringe bzw. die Stabhalter einwirkende Stempel erfolgt.

Diese Stempel sollten vorzugsweise mit gleichem Abstand über den Umfang der Endringe bzw. der Stabhalter verteilt angeordnet sein. Des Weiteren sollte die, in Richtung der Endringe bzw. der Stabhalter weisende Pressfläche der Stempel konkav ausgebildet sein, wobei diese Pressfläche mit Vorteil senkrecht zur Zylinderachse von einem Kreisabschnitt gebildet wird, dessen Radius dem Außenradius der fertigen, zylindrischen Siebvorrichtung entspricht. Hierdurch gelingt es während des Pressens die Kräfte zunehmend gleichmäßiger auf die radiale Außenseite der Stabhalter zu verteilen.

Außerdem vereinfacht sich die Herstellung, wenn die Stempel jeweils auf mehrere Stabhalter einwirken.

Im Interesse einer exakten Führung sollten die Stempel zumindest während des radialen Drückens radial beweglich geführt und/oder axial zur Zylinderachse fixiert sein.

Nachfolgend soll die Erfindung an einem Ausführungsbeispiel näher erläutert werden. In der beigefügten Zeichnung zeigt:
Figur 1: eine schematische Ansicht eines zylindrischen Siebkorbes;
Figur 2: einen schematischen Querschnitt durch diesen mit Stempeln 8;
Figur 3a+b: die Aussparung 4 mit Profilstab 1 vor und nach dem radialen Drücken und
Figur 4a+b: einen Querschnitt durch einen Endring 6 mit äußerem Stabhalter 5 vor und nach der radialen Krafteinwirkung.

Die Stabhalter 3,5 werden als einstückige Ringe beispielsweise mittels Laserschneiden hergestellt. Dies ist die Grundlage für eine hohe Formgenauigkeit des Siebkorbes.

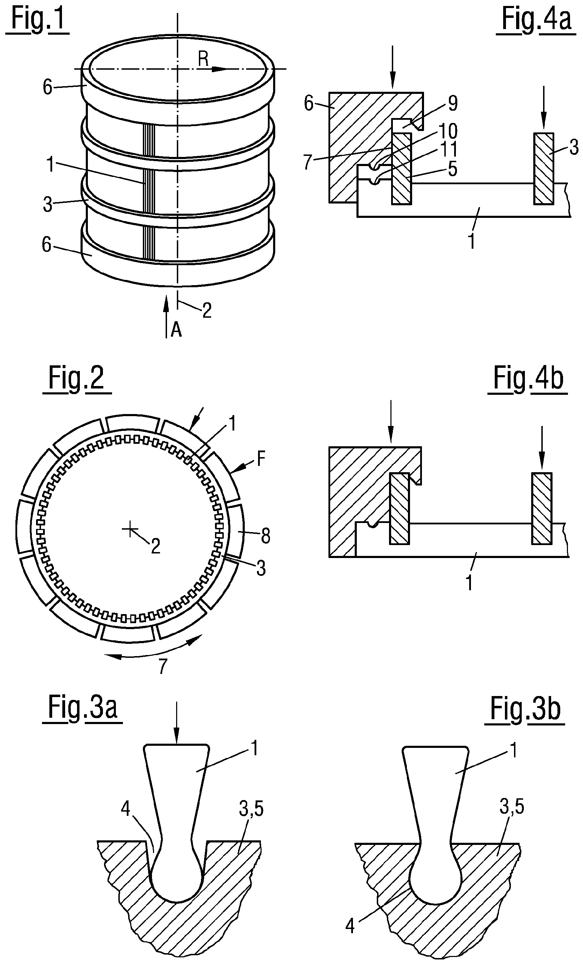

Auf der Innenseite besitzen die Stabhalter 3,5, wie in Figur 1 und 2 zu erkennen, eine Vielzahl gleichmäßig verteilt angeordneter Aussparungen 4 für die Profilstäbe 1. Diese Aussparungen 4 bieten gemäß Figur 3a ausreichend Spiel, so dass die Profilstäbe 1 problemlos axial durch diese geschoben werden können.

Im Ergebnis besteht der so vorgefertigte Siebkorb aus parallel zur Zylinderachse 2 verlaufenden Profilstäben 1, die über mehrere axial voneinander beabstandete und senkrecht zur Zylinderachse 2 verlaufende Stabhalter 3,5 gehalten werden.

Die Sieböffnungen des Siebkorbes werden von den Schlitzen benachbarter Profilstäbe 1 gebildet. In der Praxis haben solche Schlitze oft eine Weite zwischen 0,05 und 2 mm.

An den beiden stirnseitigen Enden der Siebvorrichtung befindet sich jeweils ein Endring 6, der sich radial über den entsprechenden, axial außen angeordneten Stabhalter 5 hinaus erstreckt. Diese Endringe 6 weisen auf den einander zugwandten Stirnseiten je eine Aussparung 7 auf. Durch axiales Verschieben der Endringe 6 können so die entsprechenden äußeren Stabhalter 5, wie in Figur 4a zu sehen, in der jeweiligen Aussparung 7 positioniert werden.

Für eine verstärkte Klemmung der Profilstäbe 1 in den Aussparungen 4 wird dann über radial von außen einwirkende Kräfte F ein dauerhafter Formschluss zwischen den Profilstäben 1 und den Aussparungen 4 erzeugt.

Die radiale Krafteinwirkung wird gemäß Figuren 2 über mehrere, radial gleichmäßig über den Zylinderumfang verteilt angeordnete Stempel 8 realisiert, die radial von außen auf die Stabhalter 3,5 und dabei insbesondere auf die Zylinderachse 2 des vormontierten Siebkorbes gerichtet sind. Dabei können die axial nebeneinander angeordneten Stempel 8 benachbarter Stabhalter 3 auch als ein gemeinsamer Stempel 8 ausgeführt werden.

Während die Stempel 8 zwischen den beiden äußeren Stabhaltern 5 direkt auf die Stabhalter 3 einwirken, erfolgt dies bei den äußeren Stabhaltern 5 über eine radiale Krafteinwirkung auf die entsprechenden Endringe 6.

Hierbei wird die, in Pressrichtung weisende Pressfläche aller Stempel 8 jeweils von einem Kreisabschnitt gebildet, dessen Radius dem Außenradius der Siebvorrichtung nach dem Pressvorgang entspricht. Da der von den Stabhaltern 3 bzw. den Endringen 6 gebildete Außenradius der Siebvorrichtung vor dem Pressvorgang geringfügig größer als danach ist, besteht am Beginn des Pressvorgangs zwischen den Stabhaltern 3 bzw. den Endringen 6 und der Pressfläche im mittleren Teil der Stempels 8 ein kleines Spiel. Dieses Spiel kann beim Beginn des Pressens und den damit verbundenen, geringeren Presskräften in Kauf genommen werden und vermindert sich mit fortschreitender Pressung.

Die Umformung erfolgt sehr schonend und gleichmäßig, so dass es an den Stabhaltern 3,5 zu keiner Überbeanspruchung kommt. Auf eine zusätzliche Befestigung der Profilstäbe 1 kann in der Regel verzichtet werden.

Gemäß Figur 4a+b besitzt die Aussparung 7 der Endringe 6 eine radial nach außen gerichtete Hinterschneidung 9 deren Form komplementär zum Außenumfang des Stabhalters 5 ist.

Außerdem besitzen die Profilstäbe 1 an ihrem axialen Ende gegenüber dem jeweiligen Endring 6 eine Aussparung 11 und der Endring 6 hierzu eine komplementäre, radial nach innen weisende Erhebung 10, die vor dem Zusammendrücken des Endrings 6 voneinander beabstandet sind.

Zu Beginn des Pressvorgangs bewirken die Stempel 8 bei den Endringen 6 eine Zusammendrücken und dabei ein Ausfüllen der Aussparung 7. Dies führt entsprechend Figur 4b zum Formschluss zwischen Endring 6 und äußerem Stabhaltern 5, was durch die Hinterschneidung 9 noch verstärkt wird. Ein Verschweißen sowie eine entsprechende Nachbearbeitung können daher entfallen.

Beim weiteren Pressen der Stempel 8 werden die radialen Kräfte dann auf die äußeren Stabhalter 5 weitergeleitet, so dass sich auch dort ein Formschluss zwischen den äußeren Stabhaltern 5 und den Profilstäben 1 ergibt.

Gleichzeitig kommt es beim Zusammentreffen der Aussparung 11 der Profilstäbe 1 und der Erhebung 10 des Endrings 6 ebenfalls zu einem insbesondere axial sehr belastbaren Formschluss, was beispielsweise das Anheben der Siebvorrichtung über einen Endring 6 erlaubt.

Während der radialen Krafteinwirkung werden die Stempel 8 in Führungsnuten axial und radial geführt.

Da die Innenseite der Stabhalter 3,5 während der radialen Krafteinwirkung keinen Stütz- oder Biegekräften ausgesetzt ist, führt die radiale Krafteinwirkung zu einer Verringerung des Durchmessers der kraftbeaufschlagten Stabhalter 3,5 sowie einer plastischen Verformung der Stabhalter 3,5 im Bereich der Aussparungen 4, in deren Folge der Raum zwischen Profilstab 1 und Stabhalter 3,5, wie in Figur 3b dargestellt, geschlossen wird.

Wegen der Profilierung der Profilstäbe 1 sowie der komplementären Form wird so eine starke Klemmung der Stabfüße in der jeweiligen Aussparung 4 erreicht.

## Patentansprüche

1. Verfahren zur Herstellung einer zylindrischen Siebvorrichtung mit einer Vielzahl von Profilstäben (1), bei der mehrere ringförmige, senkrecht zur Zylinderachse (2) verlaufende und voneinander beabstandete Stabhalter (3,5) an der Innenseite mit randoffenen Aussparungen (4) versehen sind, deren Form den Stabfüßen der Profilstäbe (1) im Wesentlichen komplementär entspricht und die geringfügig größer als die Stabfüße sind und bei der die Profilstäbe (1) parallel zueinander und parallel zur Zylinderachse (2) in die Aussparungen (4) eingesetzt werden, wobei jeweils ein äußerer Stabhalter (5) im Bereich eines jeweiligen stirnseitigen Endringes (6) der Siebvorrichtung zu positionieren ist und sich der Endring (6) radial über den Stabhalter (5) hinaus erstreckt, wobei der jeweilige, äußere Stabhalter (5) in eine stirnseitige Aussparung (7) des jeweiligen Endringes (6) gefügt wird, **dadurch gekennzeichnet, dass** über radial von außen auf die Endringe (6) einwirkende Kräfte eine Formveränderung der Endringe (6) sowie der äußeren Stabhalter (5) und ein dauerhafter Formschluss zwischen den Profilstäben (1) und den Aussparungen (4) dieser äußeren Stabhalter (5) erzeugt wird.

2. Verfahren nach Anspruch 1, **dadurch gekennzeichnet, dass** die zwischen den äußeren Stabhaltern (5) angeordneten Stabhalter (3) über radial von außen auf die Stabhalter (3) einwirkende Kräfte bis zum dauerhaften Formschluss der Profilstäbe (1) in den Aussparungen (4) dieser Stabhalter (3) verformt werden.

3. Verfahren nach Anspruch 1 oder 2, **dadurch gekennzeichnet, dass** die Fixierung der Profilstäbe (1) in den Aussparungen (4) der Stabhalter (3,5) ausschließlich über die sich durch die radialen Kräfte einstellende Klemmung erfolgt.

4. Verfahren nach einem der vorhergehenden Ansprüche, **dadurch gekennzeichnet, dass** die Innenseite der Stabhalter (3,5) sowie der Profilstäbe (1) während der radialen Krafteinwirkung keinen Stütz- oder Biegekräften ausgesetzt wird.

5. Verfahren nach einem der vorhergehenden Ansprüche, **dadurch gekennzeichnet, dass** die radiale Krafteinwirkung über mehrere, radial von außen auf die Endringe (6) oder die Stabhalter (3) einwirkende Stempel (8) erfolgt.

6. Verfahren nach Anspruch 5, **dadurch gekennzeichnet, dass** die Stempel (8) vorzugsweise mit gleichem Abstand über den Umfang der Endringe (6) oder der Stabhalter (3) verteilt angeordnet sind.

7. Verfahren nach Anspruch 5 oder 6, **dadurch gekennzeichnet, dass** die Stempel (8) radial beweglich geführt sind.

8. Verfahren nach Anspruch 7, **dadurch gekennzeichnet, dass** die Stempel (8) axial zur Zylinderachse (2)fixiert sind.

9. Verfahren nach einem der Ansprüche 5 bis 8, **dadurch gekennzeichnet, dass** die, in Richtung der Endringe (6) oder der Stabhalter (3) weisende Pressfläche der Stempel (8) konkav ausgebildet ist.

10. Verfahren nach Anspruch 9, **dadurch gekennzeichnet, dass** die Pressfläche jedes Stempels (8) senkrecht zur Zylinderachse (2) von einem Kreisabschnitt gebildet wird, dessen Radius dem Außenradius der fertigen Siebvorrichtung entspricht.

11. Zylindrische Siebvorrichtung mit einer Vielzahl von Profilstäben (1), bei der mehrere ringförmige, senkrecht zur Zylinderachse (2) verlaufende und voneinander beabstandete Stabhalter (3,5) an der Innenseite mit randoffenen Aussparungen (4) versehen sind, deren Form den Stabfüßen der Profilstäbe (1) im Wesentlichen komplementär entspricht und bei der die Profilstäbe (1) parallel zueinander und parallel zur Zylinderachse (2) in die Aussparungen (4) eingesetzt sind, wobei jeweils ein äußerer Stabhalter (5) im Bereich eines jeweiligen stirnseitigen Endringes (6) der Siebvorrichtung angeordnet ist und sich der Endring (6) radial über den Stabhalter (5) hinaus erstreckt, insbesondere hergestellt nach einem Verfahren der vorhergehenden Ansprüche, wobei der jeweilige, äußere Stabhalter (5) in einer stirnseitigen Aussparung (7) des jeweiligen Endringes (6) angeordnet ist **dadurch gekennzeichnet, dass** die Aussparung (7) eine radial nach außen gerichtete Hinterschneidung (9) aufweist, deren Form komplementär zum Außenumfang des Stabhalters (5) ist.

12. Zylindrische Siebvorrichtung nach Anspruch 11, **dadurch gekennzeichnet, dass** ein oder mehrere Profilstäbe (1) am radialen Außenumfang ihres axialen Endes profiliert ausgebildet sind und der gegenüberliegende Kontakt-Bereich des Endrings (6) dazu komplementär ausgeformt ist.

## Claims

1. Method for producing a cylindrical screening device having a multiplicity of profiled bars (1), in which a plurality of ring-shaped bar holders (3, 5) running at right angles to the cylinder axis (2) and spaced apart from one another are provided on the inside with open-edge recesses (4), the shape of which substantially complementarily corresponds to the bar feet of the profiled bars (1) and which are slightly larger than the bar feet, and in which the profiled bars (1) are inserted into the recesses (4) parallel to one another and parallel to the cylinder axis (2), wherein a respective outer bar holder (5) is to be positioned in the region of a respective front end ring (6) of the screening device, and the end ring (6) extends radially beyond the bar holders (5), wherein the respective outer bar holder (5) is fitted into an end recess (7) of the respective end ring (6),
**characterized in that**
a change in the shape of the end rings (6) and of the outer bar holders (5), and a permanent form-fitting connection between the profiled bars (1) and the recesses (4) of these outer rod holders (5), is produced via forces acting radially from outside on the end rings (6).

2. Method according to Claim 1,
**characterized in that**
the bar holders (3) arranged between the outer bar holders (5) are deformed via forces acting radially from outside on the bar holders (3) until the profiled bars (1) make a permanent form-fitting connection in the recesses (4) of these bar holders (3).

3. Method according to Claim 1 or 2,
**characterized in that**
the profiled bars (1) are fixed in the recesses (4) of the bar holders (3, 5) exclusively via the clamping established by the radial forces.

4. Method according to one of the preceding claims,
**characterized in that**
the inner side of the bar holders (3, 5) and of the profiled bars (1) is not exposed to any supporting or bending forces during the radial action of force.

5. Method according to one of the preceding claims,
**characterized in that**
the radial action of force is carried out via a plurality of plungers (8) acting radially from outside on the end rings (6) or the bar holders (3).

6. Method according to Claim 5,
**characterized in that**
the plungers (8) are preferably arranged to be distributed at the same spacing over the circumference of the end rings (6) or the bar holders (3).

7. Method according to Claim 5 or 6,
**characterized in that**
the plungers (8) are radially movably guided.

8. Method according to Claim 7,
**characterized in that**
the plungers (8) are fixed axially relative to the cylinder axis (2).

9. Method according to one of Claims 5 to 8,
**characterized in that**
the pressing surface of the plungers (8), pointing in the direction of the end rings (6) or the bar holders (3), is concave.

10. Method according to Claim 9,
**characterized in that**
the pressing surface of each plunger (8) at right angles to the cylinder axis (2) is formed by a circular section of which the radius corresponds to the outer radius of the finished screening device.

11. Cylindrical screening device having a multiplicity of profiled bars (1), in which a plurality of ring - shaped bar holders (3, 5) running at right angles to the cylinder axis (2) and spaced apart from one another are provided on the inside with open-edge recesses (4), the shape of which substantially complements the bar feet of the profiled bars (1), and in which the profiled bars (1) are inserted into the recesses (4) parallel to one another and parallel to the cylinder axis (2), wherein a respective outer bar holder (5) is disposed in the region of a respective front end ring (6) of the screening device, and the end ring (6) extends radially beyond the bar holders (5), in particular produced according to a method of the preceding claims, wherein the respective outer bar holder (5) is arranged in a front recess (7) of the respective end ring (6),
**characterized in that**
the recess (7) has a radially outwardly directed undercut (9), the shape of which is complementary to the outer circumference of the bar holder (5).

12. Cylindrical screening device according to Claim 11, **characterized in that** one or more profiled bars (1) are designed to be profiled on the radial outer circumference of its axial end, and the opposite contact region of the end ring (6) is shaped so as to complement it.

## Revendications

1. Procédé de fabrication d'un dispositif de tamisage cylindrique comprenant une pluralité de barres de profil (1), dans lequel plusieurs supports de barres (3, 5) annulaires, s'étendant perpendiculairement à l'axe du cylindre (2) et espacés les uns des autres, sont pourvus sur le côté intérieur d'évidements (4) ouverts sur les bords, dont la forme correspond essentiellement de manière complémentaire aux pieds de barre des barres de profil (1) et qui sont légèrement plus grands que les pieds de barre, et dans lequel les barres de profil (1) sont insérées parallèlement entre elles et parallèlement à l'axe du cylindre (2) dans les évidements (4), un support de barres extérieur (5) devant à chaque fois être positionné dans la zone d'un anneau d'extrémité frontal respectif (6) du dispositif de tamisage et l'anneau d'extrémité (6) s'étendant radialement au-delà du support de barres (5), le support de barres extérieur respectif (5) étant assemblé dans un évidement frontal (7) de l'anneau d'extrémité (6) respectif, **caractérisé en ce que**, par l'intermédiaire de forces agissant radialement de l'extérieur sur les anneaux d'extrémité (6), une modification de forme des anneaux d'extrémité (6) ainsi que des supports de barres extérieurs (5) et une liaison de forme permanente entre les barres de profil (1) et les évidements (4) de ces supports de barres extérieurs (5) sont produites.

2. Procédé selon la revendication 1, **caractérisé en ce que** les supports de barres (3) agencés entre les supports de barres extérieurs (5) sont déformés par l'intermédiaire de forces agissant radialement de l'extérieur sur les supports de barres (3) jusqu'à la liaison de forme permanente des barres de profil (1) dans les évidements (4) de ces supports de barres (3).

3. Procédé selon la revendication 1 ou 2, **caractérisé en ce que** la fixation des barres de profil (1) dans les évidements (4) des supports de barres (3, 5) s'effectue exclusivement par l'intermédiaire du serrage qui s'établit sous l'effet des forces radiales.

4. Procédé selon l'une quelconque des revendications précédentes, **caractérisé en ce que** le côté intérieur des supports de barres (3, 5) ainsi que des barres de profil (1) n'est pas soumis à des forces de soutien ou de flexion pendant l'application de la force radiale.

5. Procédé selon l'une quelconque des revendications précédentes, **caractérisé en ce que** l'application de la force radiale s'effectue par l'intermédiaire de plusieurs poinçons (8) agissant radialement de l'extérieur sur les anneaux d'extrémité (6) ou les supports de barres (3).

6. Procédé selon la revendication 5, **caractérisé en ce que** les poinçons (8) sont agencés de manière répartie de préférence à égale distance sur la circonférence des anneaux d'extrémité (6) ou des supports de barres (3).

7. Procédé selon la revendication 5 ou 6, **caractérisé en ce que** les poinçons (8) sont guidés de manière mobile radialement.

8. Procédé selon la revendication 7, **caractérisé en ce que** les poinçons (8) sont fixés axialement par rapport à l'axe du cylindre (2).

9. Procédé selon l'une quelconque des revendications 5 à 8, **caractérisé en ce que** la surface de pression des poinçons (8), orientée en direction des anneaux d'extrémité (6) ou des supports de barres (3), est configurée sous forme concave.

10. Procédé selon la revendication 9, **caractérisé en ce que** la surface de pression de chaque poinçon (8) est formée, perpendiculairement à l'axe du cylindre (2), par un segment de cercle dont le rayon correspond au rayon extérieur du dispositif de tamisage fini.

11. Dispositif de tamisage cylindrique comprenant une pluralité de barres de profil (1), dans lequel plusieurs supports de barres (3, 5) annulaires, s'étendant perpendiculairement à l'axe du cylindre (2) et espacés les uns des autres, sont pourvus sur le côté intérieur d'évidements (4) ouverts sur le bord, dont la forme correspond de manière essentiellement complémentaire aux pieds de barre des barres de profil (1), et dans lequel les barres de profil (1) sont insérées parallèlement entre elles et parallèlement à l'axe du cylindre (2) dans les évidements (4), un support de barres extérieur (5) étant agencé dans la zone d'un anneau d'extrémité frontal respectif (6) du dispositif de tamisage et l'anneau d'extrémité (6) s'étendant radialement au-delà du support de barres (5), notamment fabriqué par un procédé selon les revendications précédentes, le support de barres extérieur respectif (5) étant agencé dans un évidement frontal (7) de l'anneau d'extrémité respectif (6), **caractérisé en ce que** l'évidement (7) présente une contre-dépouille (9) orientée radialement vers l'extérieur, dont la forme est complémentaire à la circonférence extérieure du support de barres (5).

12. Dispositif de tamisage cylindrique selon la revendication 11, **caractérisé en ce qu'**une ou plusieurs barres de profil (1) sont configurées sous forme profilée sur la circonférence extérieure radiale de leur extrémité axiale et la zone de contact opposée de l'anneau d'extrémité (6) est formé de manière complémentaire.
